# EUROPEAN PATENT SPECIFICATION

(11) **EP 2 939 979 B1**
(45) Date of publication and mention of the grant of the patent: **27.10.2021**
(21) Application number: 12890900.9
(22) Date of filing: 28.12.2012
(51) Int. Cl.: C01B 32/194, C01B 32/192, C01B 32/23, B01J 19/12, B82Y 30/00, B82Y 40/00, C09D 167/02

(54) **GRAPHENE-POLYMER COATED STEEL SHEET**
GRAPHENE-POLYMER-BESCHICHTETES STAHLBLECH
TÔLE RECOUVERTE DU COMPOSITE GRAPHÈNE-POLYMÈRE

(43) Date of publication of application: 04.11.2015
(73) Proprietor: Posco, Gyeongsangbuk-do 790-300 (KR)
(72) Inventor: YOO, Hye-Jin, Gwangyang-si Jeollanam-do 545-711 (KR); KIM, Joong-Kyu, Gwangyang-si Jeollanam-do 545-711 (KR); JUNG, Yong-Gyun, Gwangyang-si Jeollanam-do 545-711 (KR); KIM, Jong-Sang, Gwangyang-si Jeollanam-do 545-711 (KR)
(74) Representative: Zech, Stefan Markus
(86) International application number: PCT/KR2012/011752
(87) International publication number: WO 2014/104446

(56) References cited:
- WO-A1-2008/045778
- WO-A1-2009/085015
- WO-A1-2010/141348
- WO-A1-2011/055198
- KR-A- 20100 031 981
- KR-A- 20120 049 820
- KR-A- 20120 119 393
- KR-B1- 101 150 974
- KR-B1- 101 190 304
- LIANG Y ET AL: "DISPERSION OF GRAPHENE SHEETS IN ORGANIC SOLVENTS SUPPORTED BY IONIC INTERACTIONS", ADVANCED MATERIALS, WILEY - V C H VERLAG GMBH & CO. KGAA, DE, vol. 21, no. 17, 4 May 2009 (2009-05-04), pages 1679-1683, XP002724168, ISSN: 0935-9648, DOI: 10.1002/ADMA.200803160 [retrieved on 2009-02-06]
- YANFEI XU ET AL: "A Graphene Hybrid Material Covalently Functionalized with Porphyrin: Synthesis and Optical Limiting Property", ADVANCED MATERIALS, vol. 21, no. 12, 26 March 2009 (2009-03-26), pages 1275-1279, XP055166614, ISSN: 0935-9648, DOI: 10.1002/adma.200801617
- NIYOGI S ET AL: "Solution Properties of Graphite and Graphene", JOURNAL OF THE AMERICAN CHEMICAL SOCIETY, AMERICAN CHEMICAL SOCIETY, US, vol. 128, 1 January 2006 (2006-01-01), pages 7720-7721, XP002481415, ISSN: 0002-7863, DOI: 10.1021/JA060680R
- PARK, OK GYEONG ET AL.: 'A Review of Graphene-based Polymer Nanocomposites' POLYMER SCIENCE AND TECHNOLOGY 0307-174X S08A06 vol. 22, no. 5, October 2011, pages 467 - 473, XP008177181
- Chi-Hao Chang ET AL: "Novel anticorrosion coatings prepared from polyaniline/graphene composites", CARBON., vol. 50, no. 14, 29 June 2012 (2012-06-29) , pages 5044-5051, XP055248501, GB ISSN: 0008-6223, DOI: 10.1016/j.carbon.2012.06.043

## Description

### [Technical Field]

The present disclosure relates to a graphene oxide, a graphene-polymer composite, a graphene-polymer composite-containing coating solution, and a graphene-polymer composite-coated steel sheet, and a method of manufacturing the same.

### [Background Art]

WO 2009/085015 A1 discloses a method of making a functionalized graphene oxide. LIANG Y et al. "Dispersion of graphene sheets in organic solvents supported by ionic interactions", advanced materials, Wiley - V C H Verlag GmbH & Co. KGAA, DE describes a method for the production of graphite oxide and reduced graphite oxide sheets dispersed in chloroform. WO 2011/055198 A1 discloses a process for the production of nano-scaled graphene platelets. WO 2010/141348 A1 discloses a method for producing a graphene-containing composition. WO 2008/045778 A1 describes a polymer composition, containing a polymer matrix which contains an elastomer; and a functional graphene which displays no signature of graphite and/or graphite oxide. Chang ET AL: "Novel anticorrosion coatings prepared from polyaniline/graphene composites",CARBON, Vol. 50, no. 14, pages 5044-5051, describes the preparation of edge-functionalised graphene, to which polymers can be grafted to form composites. The composites can be incorporated into corrosion protection steel coatings.

Graphene has a two-dimensional atomic carbon structure formed as a hexagonal lattice, in which vertex points, formed of carbon atoms, form a single atomic layer. Graphene has a tensile strength 100-300 times stronger than that of steel, while electron mobility thereof is approximately 1000 times more rapid than that of silicon and thermal conductivity thereof is 10 or more times that of copper. Further, graphene is sufficiently transparent to allow 98% of light to be transmitted therethrough, and has properties in which even in the case of being bent or stretched, the characteristics thereof are maintained. Due to such properties, graphene is widely utilized in the production of nanomaterials, ink, barrier materials, heat radiation materials, ultralight materials, energy electrode materials, next-generation semiconductors, transparent electrodes, and the like.

When graphene is coated on steel sheets, corrosion resistance, heat radiation properties, conductivity, adhesion, strength, workability, and the like may be secured on the surfaces of steel sheets, so steel sheets can then be utilized in a variety of fields.

In order to coat relatively large areas of base substrates with graphene, a solution process has been widely used. As disclosed in patent documents 1 and 2, in the case of the solution process, a separate binder is necessarily used to secure adhesion to base substrates.

In a case in which binders are used as described above, in general, graphene, dispersants, binders, and the like are simply mixed with each other in common use.

However, in a case in which a method such as a method according to the related art is used, since a binder and graphene may be simply mixed, a problem in terms of the stability of graphene dispersion may occur. Therefore, a separate binder having sufficient bonding force as well as allowing for the smooth dispersion of graphene should be selected. In addition, in order to obtain a sufficient dispersion effect, dispersants not having a negative influence on the physical properties of coating compositions should be appropriately selected. Further, although graphene oxides may be produced by bonding functional groups to graphene in order to allow graphene to be smoothly dispersed in binders, a problem in which after dispersion solutions are produced and a coating process thereof is performed, reduction processes need be undertaken once more at a high temperature may occur.

Furthermore, in a case in which graphene and a binder are simply mixed with each other, since the binder and graphene are disposed without particular directivity, even after a coating process is performed on a steel sheet surface, a binder layer may be located further outwardly on the steel sheet than an edge of a graphene layer, and thus, a problem in which graphene characteristics on a surface cannot be sufficiently exhibited, and the like, may occur.

### [Related Art Document]

(Patent Document 1) Japanese Patent Laid-Open Publication No. 2011-510905
(Patent Document 1) Korean Patent Laid-Open Publication No. 2011-0016287

### [Disclosure]

### [Technical Problem]

An aspect of the present disclosure provides a graphene-polymer composite-coated steel sheet able to secure adhesion to a base substrate without a separate binder resin and exhibit graphene efficiency on a coating layer.

However, issues to be solved by the present disclosure are not limited to the subject mentioned above, and other issues not mentioned above could be understood by those skilled in the art from the description provided hereinafter.

### [Technical Solution]

According to the invention, a steel sheet coated with a graphene-polymer composite includes: a base steel sheet; and a coating layer of the graphene-polymer composite, formed on the base steel sheet. A graphene of the graphene-polymer composite has a lateral size of 1 to 40µm, a thickness of 30nm or less (except for 0nm), and a surface area of 40 to 1500m²/g. Further features are defined in claim 1. Embodiments of the invention are defined in the dependent claims.

Also described is a method of producing a graphene oxide may include: producing peeled graphite by mixing graphite and a peeling aid; heat treating the peeled graphite; introducing a functional group to the peeled graphite; and performing re-peeling through microwave or ultrasonic processing. The peeling aid may be a mixture of one, two, or more of alkali metals, acids, and polar solvents.

Also described is a method of producing a graphene-polymer composite may include: mixing a solvent and a graphene oxide in which a functional group is substituted at an edge of a graphene, with each other; additionally mixing one or more of a monomer and a polymer; and bonding one or more of the monomer and the polymer to the functional group through a reaction at a temperature of 100 to 300°C. A graphene has a lateral size of 1 to 40µm, a thickness of 30nm or less (except for 0nm) , and a surface area of 40 to 1500m²/g.

### [Advantageous Effects]

According to an exemplary embodiment in the present disclosure, graphene may be directly coated on a steel sheet, without using a separate binder, and graphene may be located in an upper portion of a coating layer, whereby a steel sheet in which graphene properties may be efficiently exhibited may be provided.

### [Description of Drawings]

FIG. 1 is a process drawing illustrating a process of manufacturing a steel sheet coated with a graphene-polymer composite according to an exemplary embodiment in the present disclosure and according to the invention.
FIG. 2 illustrates a structure of a graphene-polymer composite graphite in which a polyester chain is grafted according to an exemplary embodiment in the present disclosure.
FIG. 3 is corrosion resistance evaluation images according to an exemplary embodiment in the present disclosure and a comparative example.
FIG. 4 is adhesion resistance evaluation images according to an exemplary embodiment in the present disclosure and a comparative example.
FIG. 5 is dispersion stability evaluation images according to an exemplary embodiment in the present disclosure and a comparative example.

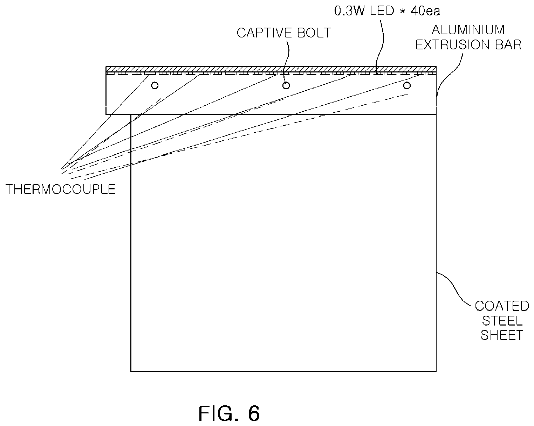

FIG. 6 illustrates a device for evaluation of heat radiation according to an exemplary embodiment in the present disclosure and a comparative example.
FIG. 7 is a graph illustrating results of IR analysis of a graphene oxide produced according to an exemplary embodiment in the present disclosure.

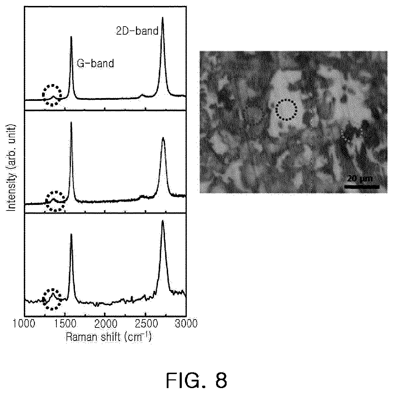

FIG. 8 illustrates Raman spectrum analysis of a structure of an upper portion of a coating layer of a steel sheet coated with a graphene-polymer composite according to an exemplary embodiment in the present disclosure.

### [Best Mode for Invention]

Hereinafter, a graphene oxide, a graphene-polymer composite, a graphene-polymer composite-containing coating solution, a graphene-polymer composite-coated steel sheet of the present invention, and a method of manufacturing the same will be described in detail with reference to the accompanying drawings. The disclosure may, however, be embodied in many different forms and should not be construed as being limited to the embodiments set forth herein. Rather, these embodiments are provided so that this disclosure will be thorough and complete, and will fully convey the scope of the disclosure to those skilled in the art.

The inventors of the present disclosure discovered that graphene may be formed as a composite with a polymer, other than being merely mixed with a binder, by allowing the graphene to be located outwardly, in detail, in an upper portion of a coating layer, when the graphene is coated on a steel sheet surface, in order to more effectively use peculiar characteristics provided in graphene as well as an absence of limitations in the selection of a binder, whereby the present disclosure is provided.

According to an exemplary embodiment in the present disclosure and according to the invention, a graphene-polymer composite-coated steel sheet includes a base steel sheet, and a coating layer of a graphene-polymer composite formed on the base steel sheet, and here, a graphene of the graphene-polymer composite has a lateral size of 1 to 40µm, a thickness of 30nm or less (except for 0nm), and a surface area of 40 to 1500m²/g.

A coated steel sheet according to an exemplary embodiment in the present disclosure is obtained by a coating layer formed on a steel sheet by a graphene-polymer composite, and as graphene is located in an upper portion of the coating layer, heat radiation characteristics and electrical conductivity, graphene characteristics, may be secured, and adhesion to the base steel sheet, cross-linkage, curing efficiency and workability may be secured due to a polymer.

A graphene-polymer composite is created by grafting a polymer using a functional group of a graphene oxide.

The graphene-polymer composite of the present disclosure is obtained by providing graphene with a functional group and subsequently combining the functional group and the polymer with each other, and the polymer may serve as a binder useful for bonding to a steel sheet. In the case of using the composite in such a form, since the polymer having binding force is first arrayed on a steel sheet side and combined therewith, a possibility that graphene will be naturally disposed in an upper portion (an outward side) of the steel sheet may be increased. In this case, a polymer may be directly combined with a functional group bonded to the graphene and a monomer may also be combined with a functional group bonded to an edge of a graphene while the monopolymer grows on a polymer.

As a base steel sheet that may be used in the present disclosure, a cold rolled steel sheet; a zinc-plated steel sheet; a zinc-based electroplated steel sheet; a fused zinc plated steel sheet; an aluminum plated steel sheet; a plated steel sheet containing, in a plating layer thereof, cobalt, molybdenum, tungsten, nickel, titan, aluminum, manganese, iron magnesium, tin, copper, impurities, mixtures thereof, or dissimilar metals; an aluminum alloy plate to which silicon, copper magnesium, iron, manganese, titan, zinc or a mixture thereof is added; a zinc-plated steel sheet on which a phosphate is coated; a hot rolled steel sheet; or the like may be used, but the base steel sheet is not limited thereto.

A thickness of the coating layer may be within a range of 1 to 20pm in terms of securing adhesion force with a material and workability thereof.

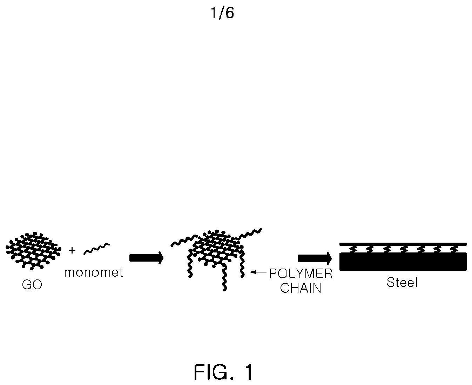

With reference to FIG. 1, a method of manufacturing a steel sheet coated with a graphene-polymer composite according to an exemplary embodiment in the present disclosure will be described.

First, a graphene-polymer composite-containing coating solution may be prepared. A graphene-polymer composite and a graphene-polymer composite-containing coating solution may be prepared through the following processes.

First, a graphene oxide to which a functional group is bonded may be prepared.

As an existing graphene oxide production method, an oxide processing method in which a functional group is overall created on a basal plane and an edge may be mainly used. In detail, graphene is oxidized by compositely treating an oxide such as H₂SO₄, K₂S₂O8, PO₅, NaNO₃, or KMnO₄ together with graphene.

However, in the case of using such a method, the number of functional groups bonded to an edge may not be controlled, and the number of polymer chains grafted through the functional groups is excessively increased in a subsequent process. Thus, a structural defect may occur on a coating steel sheet including graphene.

Thus, according to an non-exemplary embodiment in the present disclosure, a method of introducing a functional group to a process of peeling graphene from graphite may be employed. Peeling and dispersion properties may be improved by selectively functionalizing an edge surface of a graphite so as to exhibit excellent physical graphene properties by suppressing a structural defect.

A method of manufacturing a graphene oxide will hereinafter be described in detail.

Peeled graphite may be produced by mixing graphite and a peeling aid. In this case, as the peeling aid, a mixture of one, two, or more of alkali metals, acids, and polar solvents may be used. The alkali metals may be ions of Li, Na, K, Rb, Cs, Fr, or the like or a compound thereof. As the acid, a sulfuric acid, a hydrochloric acid, a nitric acid, potassium permanganate, or the like may be used. Examples of the polar solvents may include water, alcohol, carboxylic acid, acetone, tetrahydrofuran (THF), dimethyl formamide (DMF), DMSO(dimethyl sylfoxide), HMPA(hexamethyl phosphoramide), NMP(n-Methyl Pyrrolidone), acetonitrile, and the like.

After the peeled graphite is heat treated, a functional group is introduced to the peeled graphite. Subsequently, a re-peeling process may be performed through microwave or ultrasonic processing. A functional group such as a carboxyl group (-COOH) or a carbonyl group (-CO-) may be provided to the graphene or the peeled graphite through a covalent bond of carbon atoms thereof on an edge of the graphene or the peeled graphite. After the functional group is introduced, microwave irradiation or ultrasonic processing may be carried out to perform a secondary peeling process. The graphene oxide may be produced through two peeling processes, and in detail, a graphene oxide to which a functional group is bonded to an edge portion thereof may be obtained.

In the case of the graphene oxide, a functional group such as a hydroxyl group (-OH), a carboxyl group (-COOH), a carbonyl group (-CO-), an amino group (-NH₂), a hydroperoxy group (-OOH), a peroxy group (-OO-), a thiol goup (-SH), an isocyanate group (-NCO), or the like may be bonded thereto.

In the case of a graphene oxide appropriate for grafting a polymer chain, 0 to 5% (except for 0%) of a functional group with respect to a weight of graphene may be substituted at an edge of a graphene having a lateral size of 1 to 40µm, a thickness of 30nm or less (except for 0nm), and a surface area of 40 to 1500m²/g. The graphene oxide satisfying such conditions may have an increased degree of peeling according to an increased specific surface area, such that an amount of functional groups bonded to an edge of a graphene may be controlled to be significantly reduced.

In addition, the content of a functional group bonded to an edge of a graphene may be 5% or less as compared to a graphene weight. In a case in which the content of a functional group exceeds 5%, an amount of grafted polymer chains is relatively excessively increased, such that structural defects may occur in a portion thereof to which a polymer is not grafted.

Subsequently, a graphene-polymer composite may be obtained by grafting a polymer to the graphene oxide.

In order to graft a polymer using a functional group bonded to the graphene oxide, a graphene oxide, a monomer, and a solvent may be mixed with each other to react at a temperature of 250°C to 300°C, and thus may be grafted. In order to additionally promote the reaction, a catalyst may also be used. In this case, 0.1 to 1 wt% of a monomer may be used with respect to that of the graphene oxide, and the monomer and the solvent may be changed according to a type of polymer to be grafted. As a usable solvent, acetone, methanol, ethanol, 1-propanol, ethylene glycol, DMSO, DMF, NMP, THF, or the like may be used.

The graphene-polymer composite has a form in which a polymer is grafted to an edge of a graphene having a lateral size of 1 to 40µm, a thickness of 30nm or less (except for 0nm) , and a surface area of 40 to 1500m²/g. A weight of the graphene may be within a range of 0.1 to 1% as compared to that of the polymer. In a case in which the weight of graphene is less than 0.1%, since the content of a polymer chain is relatively high, it may be difficult to distribute graphene in an upper portion of a coating layer. In this case, graphene may be in a state similar to a form in which graphene is distributed in an overall polymer chain and is mixed with a binder. In a case in which the weight of graphene exceeds 1%, the content of a polymer chain is relatively low, the graphene may not have adhesion force with the steel sheet.

In this case, a heat treatment may be performed under a nitrogen atmosphere by adding a catalyst, an initiator, and the like thereto so as to have reaction therewith.

The polymer may be one or more selected from a group consisting of a polyester-based resin, a fluoro-based resin, a polyvinyl chloride resin, an epoxy-based resin, and an acrylic resin, but is not limited thereto.

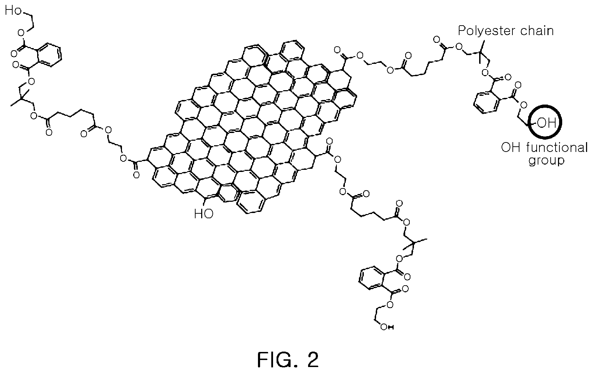

The polymer may be combined with a functional group bonded to the graphene oxide to thereby be grafted. FIG. 2 illustrates an example of a graphene oxide in which a polymer is grafted. Here, a polyester-based polymer is illustrated as being grafted, and here, it can be confirmed that the polyester chain and a termination thereof have an -OH functional group.

The polymer chain as above may serve as a binder and thus may be combined with the base steel sheet to secure adhesion therewith. The adhesion to the base steel sheet may be obtained due to a -COOH, or -OH functional group being present on a termination thereof. As examples of the polymer, a polyester, a waterborne urethane, an epoxy, an epoxy-phosphate, an epoxy phosphate denatured to an acrylic or vinyl-based monomer, acrylic-urethane denatured to a vinyl-based and acrylic or vinyl-based monomer, and the like, may be used. Thus, although a separate binder is not required, other binders may be added thereto according to a curing method.

In addition to a binding function, specific physical properties may be secured by the introduction of the polymer chain. In the case of polyurethane and polyester, workability thereof may be improved. In the case of an epoxy, a degree of curing may be improved. Polyvinylidene fluoride may serve to improve mechanical/electrical characteristics and conductivity.

As factors affecting physical properties of a coating steel sheet, a molecular weight, a glass transition temperature, a polymerization of a polymer chain, a structure of a polymer chain, a content of a polymer chain, and the like may be provided as well as a type of polymer.

For example, a polyester resin having a high molecular weight may exhibit excellent orientation and workability. Since the polyester resin has a molecular structure formed of an aliphatic group, low viscosity and high orientation may be provided. As the polyester resin, a number average molecular weight thereof may be within a range of 5,000 to 20,000, in detail, 5,500 to 15,000, in further detail, 6,000 to 12,000. In a case in which the number average molecular weight is less than 5,000, workability thereof may be degraded, and in a case in which the number average molecular weight exceeds 20,000, a problem related to chemical resistance and lowered luster may occur.

In addition, a number average molecular weight of the epoxy resin may be within a range of 900 to 7,000. In a case in which the number average molecular weight of the epoxy resin is less than 900, a curing rate may be relatively low and water resistance may be degraded at the time of performing a coating process on a steel sheet. In a case in which the number average molecular weight of the epoxy resin exceeds 7, 000, since it may be difficult to obtain essence through a denaturation reaction, corrosion resistance may be deteriorated.

Meanwhile, in general, in the case of a resin, as a number average molecular weight increases, mobility of molecules may increase, such that a resin orientation may be facilitated at the time of performing a deep drawing operation, thereby improving crack resistance of a coating layer.

In the case of the glass transition temperature, when the glass transition temperature is 5°C or higher, an excellent degree of hardness may be secured when a coating process is performed on graphene, and when the glass transition temperature is 30°C or less, a decrease in workability may be prevented. Thus, the glass transition temperature may be within a range of 5 to 30°C.

In the case of a polymerization degree of a polymer chain, in a case in which the degree of polymerization is relatively low, since an unreacted monomer remains, a polymer chain may not be sufficiently grafted, and in this case, since a polymer chain length is relatively short, the graphene may not be sufficiently floated in an upper portion of a coating layer, thus degrading adhesion to a steel sheet. In addition, in a case in which the degree of polymerization is relatively high, since a polymer chain length is relatively long to increase a gap between a steel sheet and a graphene layer and thus degrade electrical and thermal characteristics such as conductivity and heat radiation, and the like, and further, since a polymer chain is partially present on a graphene layer instead of only graphene being present, a polymer chain may remain in an upper portion of the coating layer, and thus, graphene characteristics may not be efficiently exhibited.

Thus, a hydroxyl equivalent of a polyester resin may be controlled to be within a range of 5 to 20 mgKOH/g, an NCO/OH equivalent ratio polyurethane may be controlled to be within a range of 1 to 3, and an epoxy equivalent ratio may be controlled to be within a range of 450 to 3,500.

In the case of a polymer chain structure, a linear structure may have better workability than that of a branch structure.

Thus, a structurally stable graphene-polymer composite may be formed by combining polymer chains having required physical properties with each other using a variety of functional groups bonded to the graphene oxide . A polymer chain has characteristics allowing for the binding thereof to a base steel sheet so as to be located on a lower side, such that flexibility, a polymer characteristic, may be significantly exhibited as well as adhesion to the base steel sheet; while the graphene is induced upwardly of the coating layer so as to significantly exhibit a graphene characteristic on a surface of the steel sheet.

Since the polymer chains easily disperse in an organic solvent, dispersion stability may also be excellent.

In addition, a functional group of a polymer chain termination may participate in a cross-linkage reaction and a curing reaction such that curing efficiency may be increased as well as an increase in adhesion.

The coating solution may be prepared by mixing a polymer resin, a curing agent, a catalyst and a solvent with the graphene-polymer composite prepared as above.

As the curing agent, an existing melamine-based curing agent may be used, but a urethane-based curing agent may also be used to improve adhesion. As the urethane-based curing agent, one or more selected from a group consisting of methylethyl ketoxime blocked hexamethylene diisocyanate (MEKO-HDI), trimer, methylethyl keoxime blocked isophorone diisocyanate (MEKO-IPDI) trimer, 3,5-dimethyl pyrazole blocked hexamethylene diisocyanate (DMP-HDI) trimer, and 3,5-dimethyl pyrazole blocked isophorone diisocyanate (DMP-IPDI) trimer may be used, but the urethane-based curing agent is not limited thereto. In detail, Desmodur BL3175, Desmodur BL4265, or Desmodur PL350 by Bayer, or Trixene BI7984, Trixene BI7982, or Trixene BI7951 by Bexenden, or the like may be used.

When the base steel sheet is coated with the graphene-polymer composite-containing coating solution and dried, a steel sheet on which a coating layer of the graphene-polymer composite has been formed may be obtained.

As a drying method thereof, a hot blast heating method, an induction heating method, or the like may be used. The hot blast heating method may be performed at a temperature of 80 to 340°C for 3 to 50 seconds, and the induction heating method may be performed within a frequency range of 5 to 50MHz at power of 3 to 15KW for 2 to 30 seconds. In this case, as the dry temperature, a peak metal temperature (PMT) may be within a range of 100 to 300°C.

A coating layer of the graphene-polymer composite may include 0 to 5 wt% (except for 0 wt%) of graphene with respect to an overall weight of the coating layer, and 90% or more of the graphene contained in the coating layer of the graphene-polymer composite may be located in an upper portion, for example, within 50% of the coating layer in a thickness direction, such that graphene characteristics may be exhibited on a surface layer of the steel sheet.

Hereinafter, exemplary embodiments of the present disclosure will be described in further detail. The exemplary embodiments of the present disclosure below are provided such that the present disclosure may be understood thoroughly and completely, and thus, should not be construed as being limited to the embodiments set forth herein.

### [Embodiment]

### 1. Preparation of Graphene Oxide

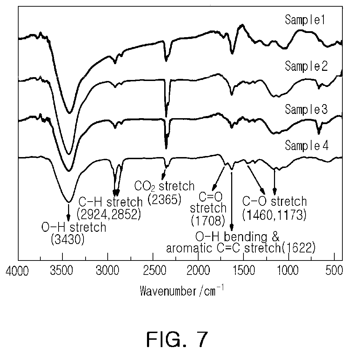

Graphite and sulfuric acid were mixed and stirred. Obtained peeled graphite was heat treated and subsequently a functional group was introduced thereto. A graphene oxide to which a functional group was bonded to an edge of a graphene was obtained by irradiating microwaves thereonto. As can be confirmed from FIG. 7, an IR spectrum illustrating that a functional group was bonded to an edge of a graphene was obtained.

As a measurement result of a lateral size, a thickness, a surface area of the graphene oxide, the lateral size was 10pm, the thickness was 7nm, and the surface area was 600m²/g.

### 2. Production of Graphene-Polymer Composite

A monomer was prepared by mixing neopentylglycol(NPG), ethyleneglycol(EG), phthalic anhydride(PhAn), and adipic acid(AA) with each other at a mole ratio of neopentylglycol(NPG) :ethyleneglycol(EG) :phthalic anhydride (PhAn) : adipic acid (AA) equal to 1.5:1.5:1:1. 0.5 wt% of a graphene oxide with respect to a weight of the monomer, 0.05 wt% of butylchlorotine dihydroxide, an esterification cataylyst, with respect to the weight of the monomer, and butyl acetate, a solvent, were mixed, and were grafted at 280°C, whereby a graphene-polyester composite was produced.

### 3. Production of Graphene-Polymer Composite-Containing Coating Solution

A synthesized graphene-polyester composite, blocked isocyanate (Trixene BI 7982 by Baxenden Chemicals Ltd) as a curing agent, dibutyl tin dulaurate (DBTDL) as a catalyst, propylene glycol ether acetate as a solvent were mixed at respective compositional amounts illustrated in table 1, whereby graphene-polyester composite-containing coating solutions G005, G010 and G015 were produced. In this case, the contents of graphene contained in the graphene-polyester composites were 5wt%, 10wt%, and 15 wt% in G005, G010 and G015, respectively. In addition, the addition amounts of the synthesized graphene-polyester composite were respectively 30g in G005, G010 and G015.

For the comparison thereof, a 'G000' solution in which a graphene-polyester was not contained was also prepared. In the 'G000' solution, 25g of a commercial polyester resin (CRF00167, KCC), 5g of graphene, blocked isocyanate (Trixene BI 7982 by Baxenden Chemicals Ltd), a curing agent, and dibutyl tin dulaurate (DBTDL) as a catalyst were mixed with each other at respective compositional amounts illustrated in table 1, whereby a graphene-polyester dispersion solution GOOO was produced.

**[Table 1]**

| Divi sion | Polyester Resin (g) | Content of Graphene contained in Graphene-Polyester Composite (wt%) | Curin g Agent (g) | Catal yst (g) | Solven t (g) |
|---|---|---|---|---|---|
| G000 | 25 | - | 4.7 | 0.01 | 10 |
| GO05 | 0 | 5 | 4.7 | 0.01 | 10 |
| GO10 | 0 | 10 | 4.7 | 0.01 | 10 |
| GO15 | 0 | 15 | 4.7 | 0.01 | 10 |

### 4. Manufacturing of Coating Steel Sheet

The manufactured graphene-polyester composite-containing coating solution and the graphene-polymer dispersion solution were respectively coated on a surface of a galvanized (G.I.) steel sheet using a #3 bar coater, to subsequently be dried at a PMT of 250°C for 40 seconds to thus form a coating layer of 10pm.

### 5. Physical Analysis of Coating Steel Sheet

Corrosion resistance, adhesion, dispersion stability, curing efficiency, heat radiation properties, and electrical conductivity of respective coating steel sheets were measured. In addition, it could be confirmed that a graphene component was well coated in an upper portion of a coating layer of the coating steel sheet according to an exemplary embodiment in the present disclosure through Raman spectrum without a structural defect.

### (1) Corrosion Resistance

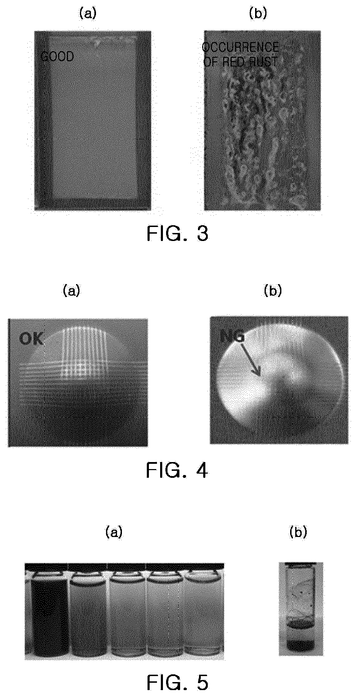

A coated sample was subjected to a process of continuously spraying the coated sample with a 5% saline solution at a temperature of 35°C and a humidity of 95%, and after 72 hours, was checked with respect to the white rust coverage thereof. In the case of a steel sheet of FIG. 3(b) coated with the graphene-polymer dispersion solution (G000), severe red-blue rust occurred, but in the case of a steel sheet of FIG. 3(a) coated with the graphene-polyester composite-containing coating solution (G010) according to the exemplary embodiment in the present disclosure, it could be appreciated that a surface of the steel sheet of FIG. 3 (a) was free of impurities.

### (2) Adhesion

The coated sample was cut into 100 pieces having respective sides of 1mm using a cutter, and 3M adhesive tape was bonded thereto and detached therefrom, whereby an adhesive degree of a coating layer was evaluated.

The adhesion of a steel sheet of FIG. 4(a) coated with the graphene-polyester composite-containing coating solution (G010) according to the exemplary embodiment in the present disclosure was good as compared to a steel sheet of FIG. 4(b) coated with the graphene-polymer dispersion solution (G000).

### (3) Dispersion Stability

The graphene-polymer composite-containing coating solutions (G010) for each concentration according to the exemplary embodiment in the present disclosure and the graphene-polymer dispersion solution (G000) were produced and stored in glass containers, and states thereof after one month had elapsed therefrom were compared to each other. The comparison result thereof is illustrated in FIG. 5. In the case that graphene and a polymer were simply blended (see FIG. 5 (b)), it could be confirmed that graphene was separated from an organic solvent; while in the case of the coating solution of FIG. 5 (a) according to the exemplary embodiment in the present disclosure, it could be confirmed that when dispersion properties were measured by differentiating dilution magnification with water, dispersion properties were excellent in all cases without separation thereof from a solvent.

### (4) Curing Efficiency

In the case of curing efficiency, the graphene-polymer composite-containing coating solution (G010) and the graphene-polymer dispersion solution (G000) were coated after respectively differentiating a peak metal temperature (PMT), and adhesion between a coating layer and a material was tested, whereby curing efficiency thereof was evaluated.

The adhesion was evaluated with respect to both of processed portion and a flat plate. Lines denoting rows and columns of the lattice were etched in a surface of a surface-treated steel sheet with a distance of 1mm therebetween using a crosscut guide employing a sharp knife to thus form 100 spaces in lattice form therein, and the portion drawn in the lattice was pushed up to be located at a height of 6mm using Erichsen tester. Adhesive tape (NB-1 by Ichiban) was adhered to the pushed-up portion thereof, and subsequently, was detached therefrom, whereby a state of a detached surface was checked and evaluated.

Further, lines denoting rows and columns of the lattice were etched in the flat plate with a distance of 1mm therebetween to thus form 100 spaces in lattice form therein, and immediately, adhesive tape (NB-1 by Ichiban) was adhered thereto, and subsequently, was detached therefrom, whereby a surface detachment state was checked and evaluated.

An evaluation result with respect to both of the processed portion and the flat plate is represented as attached number/100'. In other words, the case that no portions were detached from the surface is represented as '100/100' , the case that 10 delaminations occurred is represented as '90/100' and the case that 20 delaminations occurred is represented as '80/100' .

In the case of bending, a surface of a coated sample was bent at an angle of 180° to subsequently be inserted into a vise and tightened until it became flat (subjected to 0, 1, 2, 3T-Bending). Delamination of a coating layer and the occurrence of cracks in a bent portion were evaluated.

**[Table 2]**

| | | **Graphene-Polymer Composite-containing Coating Solution** | | | **Graphene-Polymer Dispersion Solution** | | |
|---|---|---|---|---|---|---|---|
| PMT | L/S | C.E.T 6mm (Proce ssed Portio n) | Cross-c ut (Flat Plate) | Bending | C.E.T 6mm (Proce ssed Portio n) | Cross-cut (Flat Plate) | Bending |
| 220° C or Lowe r | 2mpm | 100/10 0 | 100/100 | No Cracks | 80/100 | 80/100 | Delamin ation of Coating layer |
| 230° C | 2mpm | 100/10 0 | 100/100 | No Cracks | 90/100 | 100/10 0 | Delamin ation of Coating layer |
| 240° C | 2mpm | 100/10 0 | 100/100 | No Cracks | 100/10 0 | 100/10 0 | No Cracks |
| 260° C | 2mpm | 100/10 0 | 100/100 | No Cracks | 100/10 0 | 100/10 0 | No Cracks |
| 270° C | 2mpm | 100/10 0 | 100/100 | No Cracks | 90/100 | 90/100 | No Cracks |
| 290° C | 2mpm | 90/100 | 100/100 | No Cracks | 80/100 | 80/100 | No Cracks |

| | | | | | | | |
|---|---|---|---|---|---|---|---|
| (L/S: line speed, C.E.T: cross-cut, Erichsen test & tapping test) | | | | | | | |

The sample coated with the graphene-polymer composite-containing coating solution had both good adhesion (with respect to the flat plate and the processed portion) and bending according to a change in PMT. In the case of adhesion, the coating layer was not delaminated even after tapping. In addition, in the bending portion, the coating layer was not peeled off or cracks did not occur. Thus, it could be appreciated that a sufficient degree of curing was obtained according to a PMT change.

However, in the case of the sample coated with the graphene-polymer dispersion solution produced through simple blending, a phenomenon in which a coating layer was delaminated according to a PMT change occurred. A phenomenon in which the coating layer was delaminated occurred at a PMT of 230°C or lower, cracks occurred at a PMT of 270°C or higher, and adhesion (with respect to the flat plate and the processed portion) was only acceptable within a temperature range of 240°C to 250°C. In other words, the coating solution was not sufficiently cured to be delaminated and peeled at a relatively low PMT; while at a relatively high PMT, the coating solution was excessively cured, thus causing cracks in the coating layer. Thus, it was confirmed that performing the coating process using the graphene-polymer composite had good curing efficiency in a relatively wide range of PMT and also had relatively better curing efficiency even at the same PMT.

### (5) Heat Radiation and Electrical Conductivity

A test piece was prepared by coating both surfaces of an electroplated steel sheet (EG) with a fingerprint resistant resin, a heat radiation resin, a graphene oxide (GO) dispersion resin, the graphene-polymer composite-containing coating solution (of the present disclosure).

The fingerprint resistant resin was a coating solution containing a polyurethane dispersion resin, 3 to 6 parts by weight of a phosphate, 3 to 6 parts by weight of zirconium fluoride titanium, 20 to 50 parts by weight of an inorganic binder resin, and 0.5 to 1.50 parts by weight of a silane compound. The heat radiation resin contained a waterborne organic resin and a thermal conduction dispersion element, and was a coating solution containing 35 to 65 parts by weight of a silicon-containing compound, and 35 to 65 parts by weight of an aluminum-containing compound with respect to 100 parts by weight of a solid content of the thermal conduction dispersion element. The graphene oxide dispersion resin was G000 among the coating solutions of table 1. The graphene-polymer composite-containing coating solution was G010 among the coating solutions of table 1.

In order to evaluate heat radiation characteristics, temperatures of a light emitting diode (LED) module and the prepared test piece were measured using a heat radiation temperature evaluation apparatus, and a temperature difference of (-) as compared to a temperature of the LED module, with respect to respective test pieces, was calculated.

In addition, electrical conductivity was measured using Loresta GP (ESP Probe) by Mitsubishi Chemical, and surface resistance was measured. A current flow rate was represented by percentage by comparing a current flow as compared to that of a non-coated test piece.

**[Table 3]**

| Division | Fingerprint Resin | Heat Radiation Resin | GO Dispersion Resin | Present Disclosure |
|---|---|---|---|---|
| Temperature (°C) | 71.95 | 70.05 | 69.95 | 67.0 |
| Heat radiation Effect (°C) | Reference | -1. 9 | -2.0 | -6.05 |
| Electrical Conductivity (mQ) | 0.036 | 0.039 | 0.039 | 0.035 |
| Current Flow Rate(%) | 100 | 100 | 80 | 100 |

It was confirmed from the result of table 3 that in the case of a heat radiation effect, a coated sample prepared using the coating solution of the present disclosure had the highest temperature difference as compared to that of the LED module, and thus, the heat radiation effect was highest.

The electrical conductivity resulted from the measurement of respective resistance, and as a value of electrical conductivity was decreased, electrical resistance was decreased. Thus, it could be appreciated that electrical resistance of a coated sample prepared using the coating solution of the present disclosure was lowest, and thus, a current flow rate was 100% due to graphene in the case of coating performed on the steel sheet. In general, in a case in which a steel sheet is coated with a polymer resin, a current does not flow, thereby decreasing a current flow rate, but according to an exemplary embodiment in the present disclosure, it can be appreciated that a graphene-polymer composite is uniformly coated on a steel sheet, whereby a current flow rate may be prevented from decreasing.

## Claims

1. A steel sheet coated with a graphene-polymer composite, comprising:
a base steel sheet; and
a coating layer of the graphene-polymer composite, formed on the base steel sheet,
wherein the graphene-polymer composite comprising, a graphene having a lateral size of 1 to 40µm, a thickness of more than 0nm and 30nm or less, and a surface area of 40 to 1500m2/g;
a functional group substituted at an edge of the graphene; and
a polymer grafted to the functional group,
wherein the functional group substituted at an edge of the graphene is more than the functional group substituted at a basal plane of the graphene,
wherein the functional group substituted at an edge of the graphene is **characterized in that** more than 0% and 5% or less with respect to a weight of graphene and
wherein the coating layer of the graphene-polymer composite comprises more than 0wt% and 5wt% or less of graphene with respect to an overall weight of the coating layer, and 90 wt% or more of the graphene contained in the coating layer of the graphene-polymer composite is located in an upper portion, equal to an upper 50% of the coating layer in a thickness direction.

2. The steel sheet coated with a graphene-polymer composite of claim 1, wherein a thickness of the coating layer is within a range of 1 to 20µm.

## Patentansprüche

1. Stahlblech, das mit einem Graphen-Polymer-Verbund beschichtet ist, umfassend:
ein Basisstahlblech; und
eine Beschichtungsschicht aus dem Graphen-Polymer-Verbund, die auf dem Basisstahlblech gebildet ist,
wobei der Graphen-Polymer-Verbund ein Graphen mit einem Quermaß von 1 bis 40 µm, einer Dicke von mehr als 0 nm und 30 nm oder weniger und einer Oberfläche von 40 bis 1500 m²/g umfasst;
eine funktionelle Gruppe, die an einem Rand des Graphens substituiert ist; und
ein Polymer, das an die funktionelle Gruppe gebunden ist,
wobei die funktionelle Gruppe, die an einem Rand des Graphens substituiert ist, mehr als die funktionelle Gruppe ist, die an einer Grundebene des Graphens substituiert ist,
wobei die funktionelle Gruppe, die an einem Rand des Graphens substituiert ist, durch mehr als 0 % und 5 % oder weniger in Bezug auf ein Gewicht des Graphens gekennzeichnet ist und
wobei die Beschichtungsschicht des Graphen-Polymer-Verbunds mehr als 0 Gew.-% und 5 Gew.-% oder weniger Graphen in Bezug auf ein Gesamtgewicht der Beschichtungsschicht umfasst, wobei sich 90 Gew.-% oder mehr des in der Beschichtungsschicht des Graphen-Polymer-Verbunds enthaltenen Graphens in einem oberen Abschnitt befinden, der den oberen 50 % der Beschichtungsschicht in einer Dickenrichtung entspricht.

2. Stahlblech, das mit einem Graphen-Polymer-Verbund beschichtet ist, nach Anspruch 1, wobei eine Dicke der Beschichtungsschicht innerhalb eines Bereichs von 1 bis 20 µm liegt.

## Revendications

1. Tôle en acier revêtue d'un composite graphène-polymère, comprenant :
une tôle en acier de base ; et
une couche de revêtement du composite graphène-polymère, formée sur la tôle en acier de base,
dans laquelle le composite graphène-polymère comprend un graphène ayant une taille latérale de 1 à 40 µm, une épaisseur de plus de 0 nm et de 30 nm ou moins, et une aire surfacique de 40 à 1 500 m²/g ;
un groupe fonctionnel substitué au niveau d'un bord du graphène ; et
un polymère greffé sur le groupe fonctionnel,
dans laquelle le groupe fonctionnel substitué au niveau d'un bord du graphène est supérieur au groupe fonctionnel substitué au niveau d'un plan basal du graphène,
dans laquelle le groupe fonctionnel substitué au niveau d'un bord du graphène est **caractérisé par** plus de 0 % et 5 % ou moins vis-à-vis d'un poids de graphène et
dans laquelle la couche de revêtement du composite graphène-polymère comprend plus de 0 % en poids et 5 % en poids ou moins de graphène vis-à-vis d'un poids global de la couche de revêtement, et 90 % en poids ou plus du graphène contenu dans la couche de revêtement du composite graphène-polymère sont situés dans une portion supérieure, égale au 50 % supérieurs de la couche de revêtement dans une direction d'épaisseur.

2. Tôle en acier revêtue d'un composite graphène-polymère selon la revendication 1, dans laquelle une épaisseur de la couche de revêtement est dans une plage de 1 à 20 µm.
